# EUROPEAN PATENT SPECIFICATION

(11) **EP 1 470 340 B1**
(45) Date of publication and mention of the grant of the patent: **29.03.2006**
(21) Application number: 03703529.2
(22) Date of filing: 23.01.2003
(51) Int. Cl.: F16B 21/02, F16B 2/20

(54) **FASTENING OF PIPE CLIPS**
BEFESTIGUNG EINER ROHRKLEMME
FIXATION DE RACCORDS DE TUYAU

(30) Priority: 01.02.2002 NL 1019891
(43) Date of publication of application: 27.10.2004
(73) Proprietor: StarQuick International Ltd., 6386 Wolfenschiessen (CH)
(72) Inventor: VAN WALRAVEN, Jan, NL-3641 GP Mijdrecht (NL)
(74) Representative: Iemenschot, Johannes Andreas
(86) International application number: PCT/NL2003/000047
(87) International publication number: WO 2003/064867

(56) References cited:
- CH-A- 669 438
- FR-A- 2 333 993
- GB-A- 2 357 117
- US-A- 4 637 178

## Description

The invention relates to a fastening element according to the preamble of claim 1.

A fastening element of this type is shown in GB-A-2 357 117, in which a profiled-section element is fitted to a wall, a ceiling or another surface and then a pipe clip is fitted to the profiled-section element. The known pipe clip comprises a first part for receiving a pipe and a second part for locking the pipe clip to the profiled-section element. The second part, which forms the mentioned fastening element comprises a plate which has a pair of flexible locking members in order to fasten the pipe clip to the profiled-section element. Integrally on its underside, the first part has a lug which, during fitting, can be introduced between the locking members via a slot in the plate. If the first part of the pipe clip is rotated through 90° with respect to the second part, the lug pushes the locking members outwards, so that they interact with the flanges of the profiled-section element.

A fastening element of another type is known from CH 669 438. The pipe clip is attached to the top side of the known fastening element by means of a click-fit connection. For this purpose, the fastening element is provided with locking lugs which are to be received in locking openings located in the foot part of the pipe clip, and the foot part of the pipe clip is provided with locking lugs to be received in locking openings which are located in the fastening element. The known fastening element is then introduced into the longitudinal slot in the profiled-section element, after which the fastening element is fixed to the profiled-section element by a rotational movement through 90° as a result of the bottom surfaces of the fastening element engaging behind the flanges of the profiled-section element. One drawback of the known fastening element is that the click-fit connection is not free of play. Consequently, it is possible that the connection between the fastening element and the pipe clip may start to rattle and not appear very robust.

It is an object of the invention to provide an alternative fastening element which allows simple fastening.

This object is achieved by a fastening element of the type described in claim 1. According to the invention, the pipe clip can be placed onto the coupling member and then fixed in place by means of a simple rotary movement. When the fastening element according to the invention has been fastened to the profiled-section element, the coupling member is automatically positioned correctly, so that the foot part of the pipe clip can be placed directly onto the fastening element. There is no need for additional actions in order to fit the pipe clip. It is also possible for the fitter to couple the pipe clip and the fastening element first and then to fasten the two components to the profiled-section element. This allows him, for example, to couple a number of pipe clips to fastening elements, then place them into his pocket before climbing a ladder in order to attach them to the profiled-section element.

The coupling member preferably comprises a pin with one or more locking lugs, which pin can be fitted into a complementary hole in a foot part of the pipe clip, so that after the relative rotation the pipe clip is locked by the one or more locking lugs. The fact that the one or more locking lugs engage behind an edge of the complementary hole in the foot part as a result of the rotation means that a robust connection is obtained.

The coupling member advantageously comprises two locking lugs or pairs of locking lugs which are arranged at an axial distance from one another and, during fitting, can each be fitted through a complementary hole arranged in the foot part of the pipe clip. The use of two locking lugs which are positioned at an axial distance from one another results in an extra-strong fastening of the pipe clip to the fastening part in the axial direction of the pin.

The top section of the fastening element is advantageously of rectangular design, and the top section, in at least one corner region, has a blocking lug, which blocks the rotation of the pipe clip to be fastened in the fitted position. These measures ensure that rotation about the pin is blocked.

The pin is advantageously arranged on a circular elevated region on the top section of the fastening element, which elevated region is complementary to a circular recess arranged in the base of the pipe clip. This elevation is favourable with regard to positioning the pipe clip on the fastening element.

Furthermore, adjacent to the elevated region the pin is preferably substantially circular in cross section, the locking lugs being cylinder segments which are formed on the circumference and the outer circumference of which has a radius of curvature which is smaller than that of the pin. This abovementioned shape of the pin and the locking lugs has a further beneficial effect on the positioning of the pipe clip and has the advantage that, in the fitted position, the pipe clip is attached to the fastening element virtually without play in the longitudinal direction of the profiled-section element.

It is preferable for the fastening element to be produced in single-part form from a plastics material. Plastic has the advantage that it is easy to produce elements of complex shape. Furthermore, the fact that the element is produced from a single part means that there is no need to carry out assembly operations in order to obtain the fastening element. In particular, injection-moulding from plastic has the advantage that fastening elements of exactly the same shape and dimensions can be produced in large quantities. Furthermore, the fastening elements made from plastic generally do not require any remachining.

Furthermore, the invention relates to a combination of a fastening element as described above and a pipe clip, preferably made from a plastics material, for fastening a pipe to the profiled-section element, which pipe clip comprises a foot part which is designed to fasten the pipe clip to the fastening element.

It is preferable for each clip segment to have a substantially semicircular bearing surface for the pipe or the like, the clip segments each being provided, at the end which is remote from the foot part, with means for forming a hook connection with one another.

The fastening element according to the invention can be used with a profiled-section element having a longitudinal slot for fastening objects, in particular a profiled-section element of the type which has two sides extending in the longitudinal direction, a base, which connects the sides, and a top side, the top side being formed by a flange which is directed inwards from each side, which flanges between them delimit a longitudinal slot, the thickness of each of the flanges in at least an edge region which adjoins the longitudinal slot increasing gradually from the longitudinal slot towards the associated side. The profiled-section element may be made from any suitable material, preferably from a plastics material. The fact that the thickness of the flange increases gradually as seen from the slot means that, during use in a fastening system having the fastening element described above, the top and bottom sections of the fastening element, during the rotation, are pushed away from one another, with the result that the fastening element can easily be fitted to the flanges as a result of the said rotation.

The flanges each have an outer surface and an inner surface, the outer surfaces being located in one flat plane and the inner surfaces preferably each extending obliquely with respect to the outer surfaces. The result is that the flanges are a kind of wedge shape. The wedge shape ensures that during rotation the top and bottom sections of the fastening element are gradually pushed away from one another, with the result that the clamping action is gradually applied to the flanges. This can also be achieved by an embodiment in which the inner surfaces comprise a curved surface.

The base of the profiled section may be provided with at least one elongate recess, with which an elongate body can be brought into line, and this body can be moved through the recess into the profiled-section element and can then be rotated so that it extends substantially transversely with respect to the elongate recess and engages behind the edges thereof. In this embodiment, it is possible to position fastening elements on both the slot side and the base side of the profiled-section element, which increases the mounting options during use.

Another aspect of the invention relates to a fastening assembly for fastening a pipe clip, to a profiled-section element, having flanges which are positioned at a distance from one another and between them delimit a longitudinal slot.

According to the prior art, it is known to mount pipe clips on a wall, ceiling or other surface by means of a screw. There are known pipe clips which are designed with a foot part in which there is a hole through which a screw can be fitted. In practice, pipe clips are often fitted in this way.

A drawback of the known fastening system of GB-A-2 357 117 is that the first part of the pipe clip has a fixed lug on the underside. This means that this part can only be fastened to a profiled-section element by means of the second part shown. It is impossible to fasten the clip part directly to a wall or other surface.

It is an object of the invention to offer an alternative way of fastening pipe clips.

To this end, the invention provides a fastening assembly comprising:
- a first fastening element, which comprises a baseplate which has an underside which is designed to engage on the outer side of the flanges of the profiled-section element, flexible locking members, which project from the baseplate and are designed to engage on the inner side of the profiled-section element, behind the flanges, being arranged on the underside of the baseplate, at a distance from one another, and an opening being arranged in the baseplate between the locking members,
- a second fastening element, which can be coupled to the object which is to be fastened to the profiled-section element and is provided with a lug which, in a first position, can be fitted through the opening in the first fastening element and can be rotated into a second position in order to interact with the locking members of the second fastening element,
in which fastening assembly, during use, the lug is rotated into the second position, the locking members are pushed outwards by the lug and the fastening assembly can be locked with respect to the profiled-section element.

An advantage of the fastening assembly according to the invention is that a fitter can choose the way in which he fastens a pipe clip to a surface depending on the conditions. The fastening can be effected via a profiled-section element by means of the fastening assembly of the two fastening elements. However, the fastening can also be effected on a different profiled-section element of different dimensions, in which case the second fastening element of the fastening assembly is fastened directly to the profiled-section element, for example using a fastening system according to claim 10. The fastening may also be effected, for example, by screwing the pipe clip directly onto the wall.

The invention will be explained in more detail with reference to the drawing, in which:
Fig. 1 shows a perspective view of a preferred embodiment of a fastening element according to the invention,
Figs 2 and 3 show the two steps involved in coupling the fastening element shown in Fig. 1 and a pipe clip,
Figs 4 and 5 show the two steps involved in fitting the coupled pipe clip and fastening element into a profiled-section element,
Fig. 6 shows a perspective view of a profiled-section element which is suitable for use with a fastening element according to the invention,
Fig. 7 shows a perspective view of one possible way of fastening pipe clips to the profiled-section element shown in Fig. 6,
Fig. 8 shows a perspective view of another possible way of fastening pipe clips to the profiled-section element shown in Fig. 6,
Fig. 9 shows a perspective view of a fastening assembly according to another aspect of the invention, and
Fig. 10 shows a perspective view of the fastening assembly shown in Fig. 9 in the fitted position.

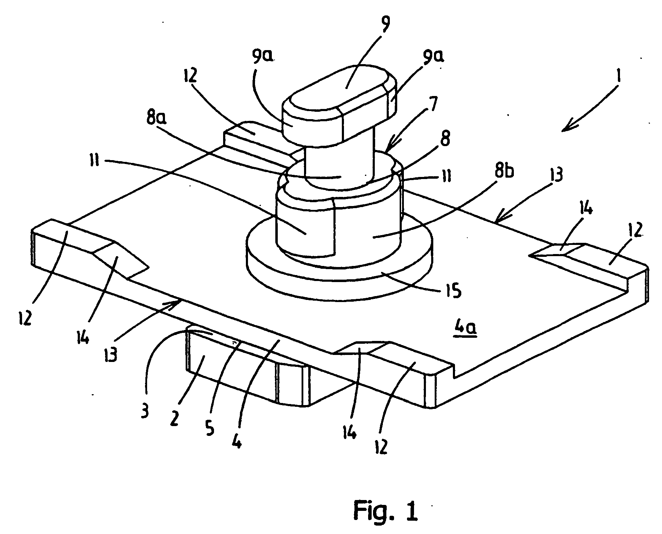

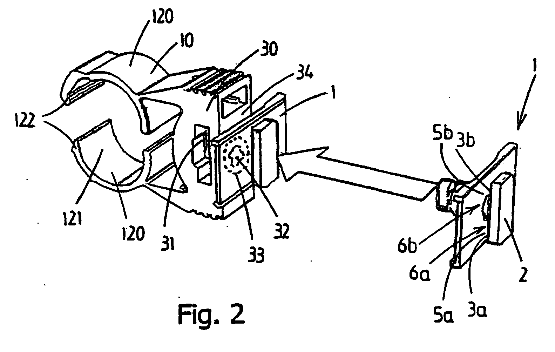

Fig. 1 shows a preferred embodiment of a fastening element according to the invention, which is denoted by reference numeral 1. The fastening element 1 is preferably produced as a single piece from a plastics material. Figs 2-5 show a pipe clip 10, preferably made from a plastics material, which is coupled to the fastening element 1. The pipe clip 10 comprises two clip segments 120, which are each pivotably connected to a foot part 30, each clip segment 120 having a substantially semicircular bearing surface 121 for the pipe or the like, and the clip segments 120 each being provided, at the end remote from the foot part 30, with means 122 for forming a hook connection with one another.

The fastening element 1 has an elongate bottom section 2 with a bottom surface 3 which on either side is designed to engage on the inner side of flanges 21 of a profiled-section element 20. Furthermore, the fastening element 1 has a top section 4 with a top surface 5 which on both sides is designed to engage on the outer side of the flanges 21. The top surface 5 and the bottom surface 3 delimit openings 6a and 6b which are positioned opposite one another and in which the flanges 21 of the profiled-section element 20 could be received. The bottom surface part 3a, 3b (indicated in Fig. 2) or the top surface part 5a, 5b (indicated in Fig. 2) of each opening 6a, 6b may be resilient, so that the surface parts 5a, 5b and 3a, 3b of each opening 6, in the fitted position, engage in a clamping manner on the flanges 21. The distance between the top surface parts 5a, 5b and the bottom surface parts 3a, 3b can be designed to be constant, but may also, for example, decrease in the outward direction, with the result that the openings 6a and 6b become increasingly narrow towards the outer side, in order to obtain better engagement on the flanges.

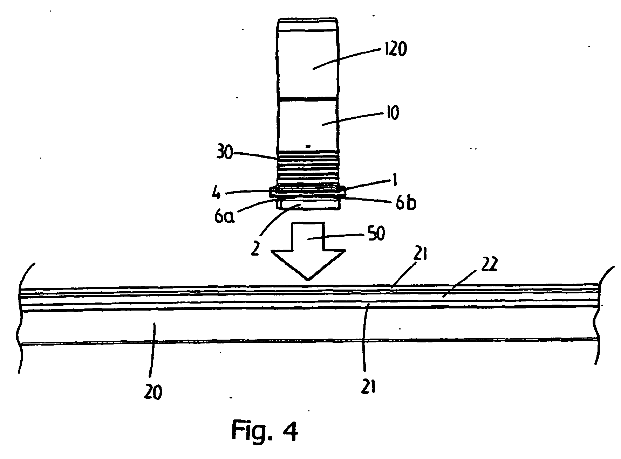

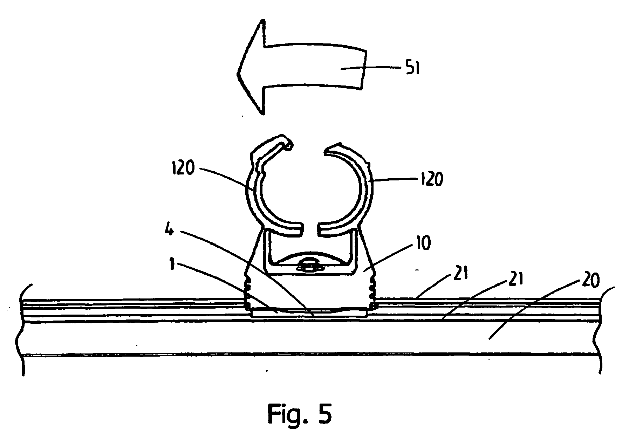

To fit the pipe clip 10, which has been coupled to the fastening element 1 beforehand, to the profiled-section element 20, the bottom section 2 of the fastening element 1 is moved into the slot 22 between the flanges 21, as indicated by the arrow 50 in Fig. 4. Then, the assembly of pipe clip 10 and fastening element 1 is rotated about an axis of rotation which is approximately perpendicular to the top surface of the flanges 21, as indicated by the arrow 51 in Fig. 5. As a result, the surfaceparts 3a and 3b engage behind the flanges 21, and the pipe clip 10 with the fastening element 1 is held in a self-clamping manner on the flanges 21. It is also possible for the fastening element 1 to be fastened to the profiled-section element 20 first, after which the pipe clip 10 can be coupled to the fastening element 1.

In another embodiment of the fastening element 1, the bottom section 2 is designed to engage, by means of the sides of the bottom section 2, on the inner side of the profile-section element 20, on the sides thereof, when the fastening element 1 is rotated. In this embodiment, the bottom section 2, in the fitted position, is clamped securely between the sides in the profiled-section element 20.

It can be seen from Fig. 1 that on the top side of the top section 4, the fastening element 1 has an integral coupling member 7 for coupling the fastening element 1 to the pipe clip 10. In this embodiment, the coupling member 7 comprises a pin 8 which is substantially circular in cross_section and has a top section 8a which has a smaller diameter than a bottom section 8b. The bottom section 8b of the pin 8 is arranged on a circular elevated region 15 on the top side 4a of the fastening element 1.

At the bottom section 8b, the coupling member 8 has a first pair of locking lugs 11. The locking lugs 11 are cylinder segments formed on the circumference of the bottom section 8b of the pin 8. The outer circumference of the cylinder segments has a radius of curvature which is smaller than that of the bottom section 8b of the pin 8. These locking lugs 11 produce robust coupling of the pipe clip 10 to the fastening element 1. To obtain an extra-robust coupling, a locking member 9, which comprises a second pair of locking lugs 9a, is arranged on the top of the pin 8. The locking lugs 9a and 11 lie at a distance from one another in the axial direction of the pin 8.

In this exemplary embodiment, the top section 4 of the fastening element 1 is designed as a rectangular plate 4a. In the corner regions at the top of the plate 4a there is in each case one blocking lug 12. Each blocking lug 12 is formed as a raised edge section which, on the long edge of the plate 4a, extends from the corner towards the centre of the edge 13. In the end which faces the centre of the edge 13, the blocking lug 12 has a section which slopes obliquely downwards towards the plate 4a.

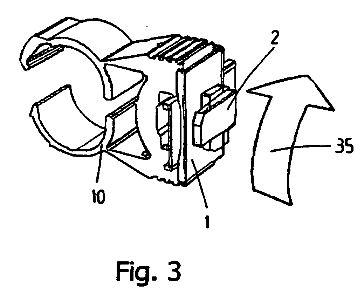

The coupling of the fastening element 1 shown in Fig. 1 and the pipe clip 10 is shown in Fig. 2 and Fig. 3. Fig. 2 shows that the coupling member 7 is fitted into the foot part 30 of the pipe clip 10. To this end, the foot part is provided, in a top part, with a hole 31 which is complementary to the locking member 9. The bottom section 8b of the pin 8 and the locking lugs 11 fit through a complementary hole 32 in the bottom part of the foot part. The elevated region 15 is complementary with respect to a recess 33 arranged in the base 34 of the foot part and fits into this recess. Then, the fastening element 1 and the pipe clip 10 are rotated through 90° with respect to one another, as indicated by arrow 35 in Fig. 3. As a result, the locking lugs 9a and 11 engage behind the edges of the complementary holes 31 and 32, respectively, with the result that the pipe clip 10 is locked by the locking lugs 9a and 11. During this relative rotation, the inclined section 14 of two of the blocking lugs 12 slides over the short edges of the base 34 of the pipe clip 10. When the pipe clip 10 and the fastening element 1 are in the fitted position, i.e. have been rotated through 90° relative to one another, the blocking lugs 12 bear against the long sides of the base 34 of the pipe clip 10 and substantially block further rotation. In this specific embodiment, it is possible to press two corner regions, which lie diagonally opposite one another, of the plate 4a downwards, with the result that the edges of the base 34 can be moved into these corner regions as a result of relative rotation beyond the blocking lugs 12, after which the pipe clip 10 and the fastening element 1 can be dismantled.

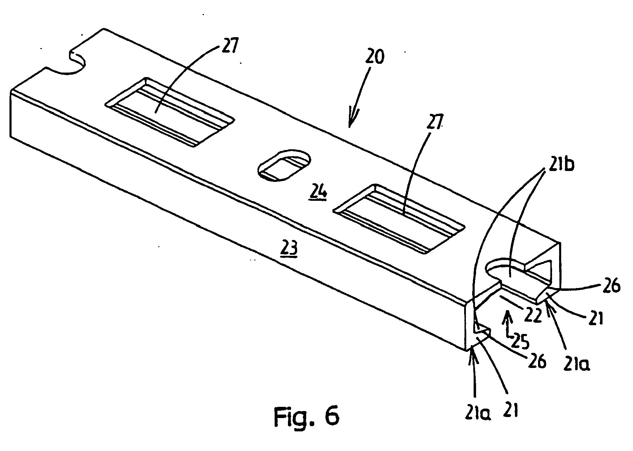

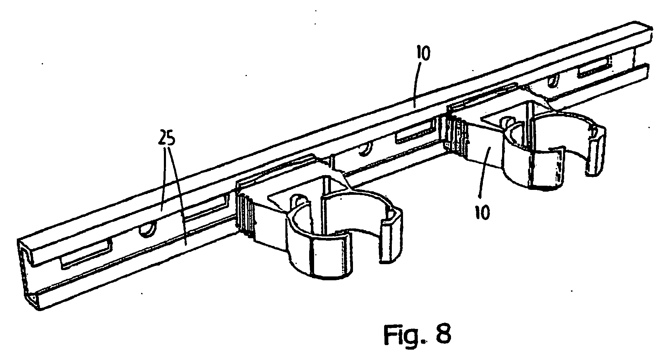

Fig. 6 shows a possible embodiment of a profiled-section element which is suitable for use with a fastening element according to the invention. The profiled-section element has a longitudinal slot 22 for fastening objects such as the above-described pipe clip 10 with a fastening element 1, also shown in Fig. 8. The profiled-section element 20 is of the type which comprises two sides 23 which extend in the longitudinal direction, a base 24, which connects the sides 23, and a top side 25. The profiled-section element 20 may be made from plastic or metal.

The top side 25 is formed by a flange 21 which is directed inwards from each side 23. The flanges 21 between them delimit the longitudinal slot 22. The flanges 21 each have an outer surface 21a and an inner surface 21b, the outer surfaces 21a being located in a flat plane and the inner surfaces 21b preferably extending obliquely with respect to the outer surfaces 21a. Therefore, in this example, the thickness of the flanges 21 increases, in at least an edge region 26 adjacent to the slot 22, from the longitudinal slot 22 towards the sides 23. In an embodiment which is not shown, the inner surfaces 21b may comprise a curved surface, so that there too the thickness of the flanges 21, in at least an edge region 26 which adjoins the slot 22, increases from the longitudinal slot 22 towards the sides 23. In both embodiments, a type of wedge shape is obtained with regard to the flanges 21. The wedge shape ensures that during rotation of the fastening element 1 the top and bottom surfaces 5 and 3, respectively, of each opening 6 are gradually pushed away from one another, with the result that their clamping action is gradually applied to the flanges 21.

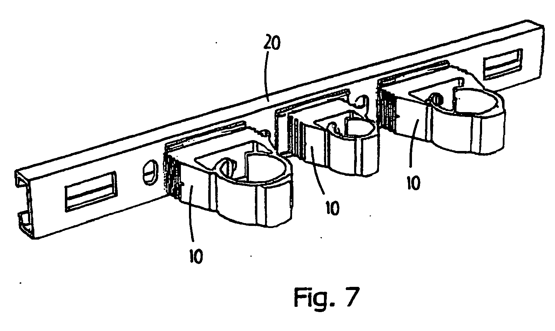

The base 24 is provided with at least one elongate recess 27, with which an elongate body, such as for example the elongate bottom section 2 of the fastening element 1, can be brought into line and can be moved through the recess 27 into the profiled-section element and can then be rotated such that it extends substantially transversely with respect to the elongate recess 27 and engages behind the edges thereof. Figure 7 shows, by way of example, how three pipe clips 10 are fastened to the profiled-section element 20 in this way. In this embodiment, it is possible to place fastening elements 1 with pipe clips 10 on both the slot side as shown in Fig. 8 and on the bottom side of the profiled-section element 20 as shown in Fig. 7, which increases the possible options for fitting the fastening element 1 according to the invention to this specific profiled-section element 20 during use.

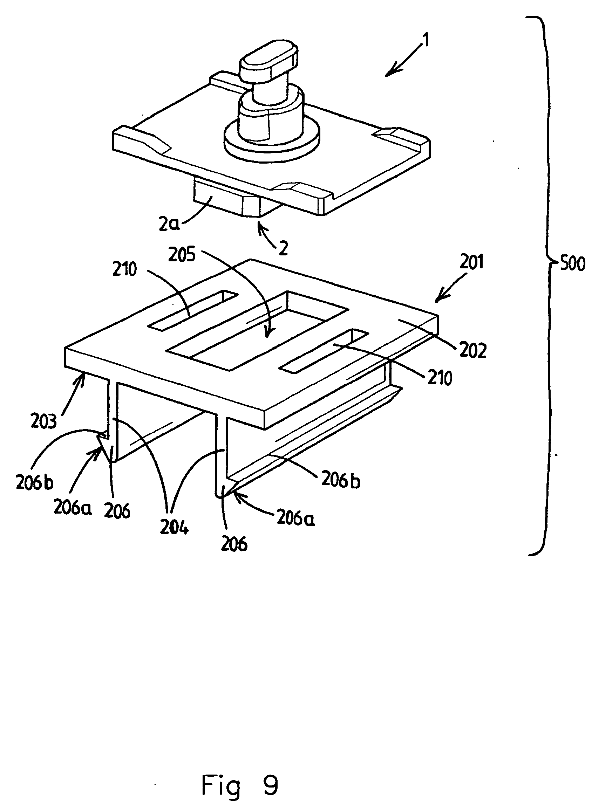

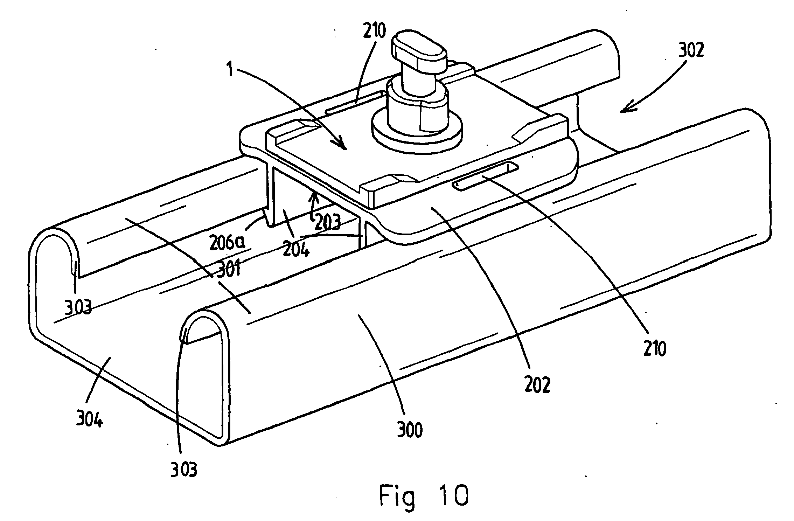

Another aspect of the invention is shown in Figs 9 and 10, which show a fastening assembly 500 for fastening an object to a profiled-section element 300. The profiled-section element 300, which is shown in Fig. 10, has a top side which is provided with two flanges 301 which delimit a longitudinal slot 302, and has a base 304. The flanges 301 of the profiled-section element 300 shown have a section 303 which extends inwards towards the base 304 at the free end. The fastening assembly 500 comprises a first fastening element 201 and a second fastening element 1.

The first fastening element 201 comprises a baseplate 202 having an underside 203. The underside 203 is designed to engage on the outer side of the flanges 301 of the profiled-section element. On the underside 203 of the baseplate 202, locking members 204, which project from the baseplate 202, are arranged at a distance from one another. The locking members 204 are flexible and are designed to engage behind the flanges 301 on the inner side of the profiled-section element 300. At their free end, the locking members 204 have outwardly projecting locking lugs 206 with a locking surface 206b, so that good engagement can be effected behind the inwardly projecting flange parts 303. The locking lugs 206 have inclined guide surfaces 206a which guide the introduction into the longitudinal slot 302 in the profiled-section element 300. There is an opening 205 in the baseplate 202. The opening 205 is located between the locking members 204.

The second fastening element 1 can be coupled to the object which is to be fastened to the profiled-section element. In the preferred embodiment shown, the second fastening element 1 is formed as the fastening element shown in Fig. 1 and will therefore not be described in more detail at the present point. It should be noted that according to this aspect of the invention, it is also possible to use a different fastening element. The fastening element 1 is provided with a bottom section 2 which is formed as a lug 2a which, in a first position, can be fitted through the opening 205 in the first fastening element 201. Then, the second fastening element 1 is rotated from a first position, for example through 90° with respect to the first fastening element 201, into a second position, with the result that the lug 2a presses the locking members 204 outwards. The locking lugs 206 of the locking members 204 then engage behind the inwardly projecting flange parts 303, and the fastening assembly 500 is locked with respect to the profiled-section element 300.

The distance between the parts of the locking members 204 which lie furthest outwards, i.e. in this case the distance between the points of the locking lugs 206 which face outwards, is greater than the width of the longitudinal slot 302 in the profiled-section element 300. This means that in this embodiment the guide surfaces 206a, during introduction into the longitudinal slot 302, slide over the flange parts 303, with the result that the locking members 204 are bent inwards when they are fitted into the longitudinal slot 302. When the locking lugs 206 have been moved past the flange parts 303 in the profiled-section element 300, the locking members 204 spring back and hook behind the edge of the flange parts 300 by means of their locking surfaces 206b. As a result of the lug 2a then being moved into the hole 205 and rotated into the second position, the locking members 204 with locking lugs 206 are pressed more strongly onto the flanges 301, and the fastening assembly 500 is locked to the profiled-section element 300.

It is preferable for elongate holes 210, which extend through the baseplate 202 and the long sides of which extend substantially parallel to the locking members 204, to be arranged in the baseplate 202, on the outer side of the location where the locking members 204 adjoin the baseplate 202. These holes 210 are designed to allow a head of a screwdriver or other suitable tool to be fitted through them, so that in this way the locking members 204 can be pushed inwards and are unlocked in order to allow removal of the fastening element 201 from the profiled-section element 300.

It is preferable for the first fastening element 201 and/or the second fastening element 1 of the fastening assembly 500 to be made from plastic.

The fastening assembly 500 may, for example, be used to fasten a pipe clip 10 as shown in Fig. 2 to a profiled-section element 300 with a greater slot width than the profiled-section element 20 shown in Figs 5-8, for which wider profiled-section element 300 the fastening element 1 on its own is no longer suitable, since its dimensions are too small. According to the final aspect of the invention, therefore, it is possible to provide an adapter in the form of the first fastening element 201 for use with standard profiled sections in the form of profiled-section elements 300, so that the second fastening element 1 can be used flexibly for different standard profiled sections.

## Claims

1. Fastening element (1) for the self-clamping fastening of a pipe clip (10), which is to be attached to the top side of the fastening element (1), to a profiled-section element (20), having flanges (21) which are positioned at a distance from one another and between them delimit a longitudinal slot (22), which fastening element (1) has a bottom section (2) which is designed to engage on an inner side of the profiled-section element (20) and a top section (4) which is designed to engage on the outer side of the profiled-section element (20), at least the bottom section (2), in the fitted position, engaging in a clamping manner on the profiled-section element (20), the fastening element (1) having an integral coupling member (7) designed in such a manner that the pipe clip (10) can be coupled to it by means of relative rotation of less than 180°, preferably 90°, **characterized in that** the coupling member (7) is projecting from the top section (4), which coupling member (7) can be fitted into a complementary hole (32, 33) in a foot part (30) of the pipe clip (10) for coupling the fastening element (1) and the pipe clip (10) .

2. Fastening element according to claim 1, **characterized in that** the coupling member (7) comprises a pin (8) with one or more locking lugs (11, 9a), which pin (8) can be fitted into the complementary hole (32, 33) in the foot part of the pipe clip (10), so that after the relative rotation the pipe clip (10) is secured in place by the one or more locking lugs (11, 9a).

3. Fastening element according to claim 2, **characterized in that** the coupling member (7) comprises two locking lugs (11, 9a) which are arranged at an axial distance from one another and, during fitting, can each be fitted through a complementary hole (32, 31) arranged in the foot part (30) of the pipe clip.

4. Fastening element according to one of claims 1-3, **characterized in that** the top section (4) of the fastening element (1) is of rectangular design, and **in that** the top section (4), in at least one corner region, has a blocking lug (12) which substantially blocks the rotation of the pipe clip (10) to be fastened with respect to the fastening element (1) in the fitted position.

5. Fastening element according to one of claims 2-4, **characterized in that** the pin (8) is arranged on a circular, elevated region (15) on the top section (4) of the fastening element (1), which elevated region (15) is complementary to a recess (33) arranged in the base of the pipe clip (10).

6. Fastening element according to claim 5, **characterized in that** adjacent to the elevated region (15) the pin (8) is substantially circular in cross section, the locking lugs (11) being cylinder segments which are formed on the circumference and the outer circumference of which has a radius of curvature which is less than that of the pin (8).

7. Fastening element according to one of the preceding claims, **characterized in that** the fastening element (1) is produced in single-part form from plastics material.

8. Fastening element according to one of the preceding claims, **characterized in that** the distance between the bottom section (2) and the top section (4), between which the flanges (21) can be accommodated in the fitted position, decreases towards the outside.

9. Combination of a fastening element (1) according to one of the preceding claims and a pipe clip (10), preferably made from- plastic, for fastening a pipe to the profiled-section element (20), which pipe clip (10) comprises a foot part (30) which is designed to fasten the pipe clip (10) to the fastening element (1).

10. Fastening system comprising a fastening element (1) according to one of claims 1-8, as well as a profiled-section element (20) having flanges (21) which are located at a distance from one another and between them delimit a longitudinal slot (22).

11. Fastening system according to claim 10, in which the thickness of the flanges (21) increases from the longitudinal slot (22) in the transverse direction of the profiled-section element (20).

12. Fastening assembly for fastening a pipe clip (10) to a profiled-section element (300) having flanges (301) which are located at a distance from one another and between them delimit a longitudinal slot (302), which fastening assembly comprises:
- a first fastening element (201), which comprises a baseplate (202) which has an underside which is designed to engage on the outer side of the flanges (301) of the profiled-section element (300), flexible locking members (204), which project from the baseplate (202) and are designed to engage on the inner side of the profiled-section element (300), behind the flanges (301), being arranged on the underside (203) of the baseplate (202), at a distance from one another, and an opening (205) being arranged in the baseplate (202) between the locking members (204),
- a second fastening element (1), which can be coupled to the pipe clip which is to be fastened to the profiled-section element (300) and is provided with a lug (2) which, in a first position, can be fitted through the opening (205) in the first fastening element (201) and can be rotated into a second position in order to interact with the locking members (204) of the first fastening element (201),
in which fastening assembly, during use, the lug (2) is rotated into the second position, the locking members (204) are pushed outwards by the lug (2) and the fastening assembly can be locked with respect to the profiled-section element (300).

13. Fastening assembly according to claim 12, in which the distance between those parts of the flexible locking members (204) which are located furthest outwards is greater than the width of the longitudinal slot (302) in the profiled-section element (300).

14. Fastening assembly according to claim 12 or 13, in which the flexible locking members (204), at their free end, have outwardly projecting locking lugs (206).

15. Fastening assembly according to one of claims 12-14, in which, on the outer side, at least one hole (210) is arranged next to each locking member (204) in the baseplate (202), which hole (210) extends from the bottom (203) upwards through the baseplate (202), for insertion of a tool in order to push the locking members (204) inwards when they need to be unlocked in the fitted position.

16. Fastening assembly according to one of claims 12-15, in which the first fastening element (201) is produced in single-part form from a plastics material.

17. Fastening assembly according to one of claims 12-16, in which the second fastening element (1) is produced in single-part form from plastics material.

18. Fastening assembly according to one of claims 12-16, in which the second fastening element (1) corresponds to a fastening element (1) according to one of claims 1-8.

## Patentansprüche

1. Befestigungselement (1) zur selbstklemmenden Befestigung einer Rohrschelle (10), die dafür vorgesehen ist, auf der Oberseite des Befestigungselements angebracht zu werden, an einem Profilelement (20) mit Flanschen (21), die in einem Abstand voneinander positioniert sind und zwischen sich einen Längsschlitz (22) begrenzen, wobei das Befestigungselement (1) einen unteren Abschnitt (2), der für den Eingriff auf einer Innenseite des Profilelements (20) ausgebildet ist, und einen oberen Abschnitt (4) aufweist, der für den Eingriff auf der Außenseite des Profilelements (20) ausgebildet ist, wobei zumindest der untere Abschnitt (2) in der eingepassten Position klemmend auf dem Profilelement (20) in Eingriff steht, wobei das Befestigungselement (1) ein integral ausgebildetes Koppelteil (7) aufweist, das in einer Weise ausgelegt ist, dass die Rohrschelle (10) mittels einer relativen Drehbewegung von weniger als 180°, vorzugsweise 90°, daran ankoppelbar ist, **dadurch gekennzeichnet, dass** das Koppelteil (7) vom oberen Abschnitt (4) vorsteht, wobei zum Verkoppeln des Befestigungselements (1) und der Rohrschelle (10) das Koppelteil (7) in eine komplementäre Öffnung (32, 33) in einem Sockelteil (30) der Rohrschelle (10) einpassbar ist.

2. Befestigungselement nach Anspruch 1, **dadurch gekennzeichnet, dass** das Koppelteil (7) einen Stift (8) mit einer Sicherungsnase (11, 9a) oder mehreren Sicherungsnasen (11, 9a) aufweist, wobei der Stift (8) in die komplementäre Öffnung (32, 33) im Sockelteil der Rohrschelle (10) so einpassbar ist, dass nach der relativen Drehbewegung die Rohrschelle (10) durch die eine Sicherungsnase (11, 9a) oder die mehreren Sicherungsnasen (11, 9a) in seiner Stellung gesichert ist.

3. Befestigungselement nach Anspruch 2, **dadurch gekennzeichnet, dass** das Koppelteil (7) zwei Sicherungsnasen (11, 9a) aufweist, die in einem axialem Abstand voneinander angeordnet sind und wobei während des Einpassens jede durch eine komplementäre Öffnung (32, 33), die im Sockelteil (30) der Rohrschelle angeordnet ist, eingepasst werden kann.

4. Befestigungselement nach einem der Ansprüche 1 bis 3, **dadurch gekennzeichnet, dass** der obere Abschnitt (4) des Befestigungselements (1) rechteckförmig ausgebildet ist und dass der obere Abschnitt (4) in mindestens einem Eckbereich eine Blockierungsnase (12) aufweist, die im Wesentlichen die Drehbewegung der Rohrschelle (10) blockiert, welche dafür vorgesehen ist, bezüglich des Befestigungselements (1) in der eingepassten Position befestigt zu werden.

5. Befestigungselement nach einem der Ansprüche 2 bis 4, **dadurch gekennzeichnet, dass** der Stift (8) auf einem kreisförmigen erhöhten Bereich (15) des oberen Abschnitts (1) angeordnet ist, wobei der erhöhte Bereich (15) komplementär zu einer Vertiefung (33) ist, die in der Basis der Rohrschelle (10) angeordnet ist.

6. Befestigungselement nach Anspruch 5, **dadurch gekennzeichnet, dass** benachbart zum erhöhten Bereich (15) der Stift (8) im Querschnitt im Wesentlichen kreisförmig ist, wobei die Sicherungsnasen (11) Zylindersegmente sind, die am Umfang angeformt sind und deren Außenumfang einen Krümmungsradius besitzt, der kleiner als der Radius des Stiftes (8) ist.

7. Befestigungselement nach einem der vorhergehenden Ansprüche, **dadurch gekennzeichnet, dass** das Befestigungselement (1) in einstückiger Form aus Kunststoffmaterial hergestellt ist.

8. Befestigungselement nach einem der vorhergehenden Ansprüche, **dadurch gekennzeichnet, dass** der Abstand zwischen dem unteren Abschnitt (2) und dem oberen Abschnitt (4), zwischen denen die Flansche (21) in der eingepassten Position aufnehmbar sind, zur Außenseite hin abnimmt

9. Kombination aus einem Befestigungselement (1) nach einem der vorhergehenden Ansprüche und einer Rohrschelle (10), vorzugsweise aus Kunststoff hergestellt, zum Befestigen eines Rohres am Profilelement (20), wobei die Rohrschelle (10) ein Sockelteil (30) aufweist, das zum Befestigen der Rohrschelle (10) am Befestigungselement (1) ausgebildet ist.

10. Befestigungssystem, welches ein Befestigungselement (1) nach einem der Ansprüche 1 bis 8 sowie ein Profilelement (20) mit Flanschen (21), welche sich in einem Abstand voneinander befinden und zwischen sich einen Längsschlitz (22) begrenzen, aufweist.

11. Befestigungssystem nach Anspruch 10, bei welchem die Dicke der Flansche (21) vom Längsschlitz (22) aus in der Querrichtung zum Profilelement (20) zunimmt.

12. Befestigungsbaugruppe zum Befestigen einer Rohrschelle (10) an einem Profilelement (300) mit Flanschen (301), die sich in einem Abstand voneinander befinden und zwischen sich einen Längsschlitz (302) begrenzen,
wobei die Befestigungsbaugruppe Folgendes umfasst:
- ein erstes Befestigungselement (201), welches eine Basisplatte (202) aufweist, die eine Unterseite hat, die zum Eingriff auf der Außenseite der Flansche (301) des Profilelements (300) ausgebildet ist, wobei flexible Verriegelungselemente (204), die von der Basisplatte (202) aus vorstehen und zum Eingriff auf der Innenseite des Profilelements (300) hinter den Flanschen (301) ausgebildet sind, auf der Unterseite (203) der Basisplatte (202) in einem Abstand voneinander angeordnet sind und wobei eine Öffnung (205) in der Basisplatte (202) zwischen den Verriegelungselementen (204) angeordnet ist,
- ein zweites Befestigungselement (1), das an die Rohrschelle, die dafür vorgesehen ist, am Profilelement (300) befestigt zu werden, ankoppelbar ist, und mit einer Nase (2) versehen ist, wobei die Nase in einer ersten Position durch die Öffnung (205) in dem ersten Befestigungselement (201) einpassbar und in eine zweite Position drehbar ist, um so mit den Verriegelungselementen (204) des ersten Befestigungselements (201) zusammenzuwirken,
wobei in der Befestigungsbaugruppe während des Gebrauchs die Nase (2) in die zweite Position gedreht wird, die Verriegelungselemente (204) von der Nase (2) nach außen geschoben werden und die Befestigungsbaugruppe bezüglich des Profilelements (300) verriegelt werden kann.

13. Befestigungsbaugruppe nach Anspruch 12, bei welcher der Abstand zwischen den Teilen der flexiblen Verriegelungselemente (204), die sich am weitesten außen befinden, größer ist als die Breite des Längsschlitzes (302) in dem Profilelement (300).

14. Befestigungsbaugruppe nach Anspruch 12 oder 13, bei welcher die flexiblen Verriegelungselemente (204) an ihrem freien Ende nach außen vorstehende Sicherungsnasen (206) aufweisen.

15. Befestigungsbaugruppe nach einem der Ansprüche 12 bis 14, bei welcher auf der Außenseite mindestens eine Öffnung (210) neben jedem Verriegelungselement (204) in der Basisplatte (202) angeordnet ist, wobei sich die Öffnung (210) vom Unteren (203) aus nach oben durch die Basisplatte (202) zum Einsetzen eines Werkzeugs erstreckt, um die Verriegelungselemente (204) nach innen zu schieben, wenn sie in der eingepassten Position zu entriegeln sind.

16. Befestigungsbaugruppe nach einem der Ansprüche 12 bis 15, bei welcher das erste Befestigungselement (201) in einstückiger Form aus Kunststoffmaterial hergestellt ist.

17. Befestigungsbaugruppe nach einem der Ansprüche 12 bis 16, bei welcher das zweite Befestigungselement (1) in einstückiger Form aus Kunststoffmaterial hergestellt ist.

18. Befestigungsbaugruppe nach einem der Ansprüche 12 bis 16, bei welcher das zweite Befestigungselement (1) einem Befestigungselement (1) nach einem der Ansprüche 1 bis 8 entspricht.

## Revendications

1. Elément de fixation (1) pour la fixation par autoserrage d'un collier d'attache pour tuyaux (10), qui doit être fixé sur la face supérieure de l'élément de fixation (1), à un élément à section profilée (20), comportant des rebords (21) qui sont positionnés à une distance l'un de l'autre et délimitent entre eux une fente longitudinale (22), lequel élément de fixation (1) comporte une section inférieure (2) qui est conçue pour s'engager sur une face interne de l'élément à section profilée (20) et une section supérieure (4) qui est conçue pour s'engager sur la face externe de l'élément à section profilée (20), au moins la section inférieure (2), dans la position emboîtée, s'engageant par serrage sur l'élément à section profilée (20), l'élément de fixation (1) comportant un élément d'accouplement d'un seul tenant (7) conçu de manière que le collier d'attache pour tuyaux (10) puisse lui être accouplé par rotation relative de moins de 180°, de préférence de 90°, **caractérisé en ce que** l'élément d'accouplement (7) fait saillie depuis la section supérieure (4), lequel élément d'accouplement (7) peut être emboîté dans un trou complémentaire (32, 33) dans une partie pied (30) du collier d'attache pour tuyaux (10) pour accoupler l'élément de fixation (1) et le collier d'attache pour tuyaux (10).

2. Elément de fixation selon la revendication 1, **caractérisé en ce que** l'élément d'accouplement (7) comprend une tige (8) pourvue d'une ou de plusieurs oreilles de verrouillage (11, 9a), laquelle tige (8) peut être emboîtée dans le trou complémentaire (32, 33) dans la partie pied du collier d'attache pour tuyaux (10) de telle sorte que, après la rotation relative, le collier d'attache pour tuyaux (10) est fixé en place par lesdites une ou plusieurs oreilles de verrouillage (11, 9a).

3. Elément de fixation selon la revendication 2, **caractérisé en ce que** l'élément d'accouplement (7) comprend deux oreilles de verrouillage (11, 9a) qui sont agencées à une distance axiale l'une de l'autre et, durant l'emboîtement, peuvent être chacune emboîtées dans un trou complémentaire (32, 31) agencé dans la partie pied (30) du collier d'attache pour tuyaux.

4. Elément de fixation selon l'une des revendications 1 à 3, **caractérisé en ce que** la section supérieure (4) de l'élément de fixation (1) a une forme rectangulaire, et **en ce que** la section supérieure (4) dans au moins une région d'angle, comporte une oreille de blocage (12) qui empêche sensiblement la rotation du collier d'attache pour tuyaux (10) devant être fixé par rapport à l'élément de fixation (1) dans la position emboîtée.

5. Elément de fixation selon l'une des revendications 2 à 4, **caractérisé en ce que** la tige (8) est agencée sur une région surélevée circulaire (15) sur la section supérieure (4) de l'élément de fixation (1), laquelle région surélevée (15) est complémentaire d'un évidement (33) agencé dans la base du collier d'attache pour tuyaux (10).

6. Elément de fixation selon la revendication 5, **caractérisé en ce qu'**en un point adjacent à la région surélevée (15), la tige (8) a une section transversale sensiblement circulaire, les oreilles de verrouillage (11) étant des segments cylindriques qui sont formés sur la circonférence et dont la circonférence externe a un rayon de courbure qui est inférieur à celui de la tige (8).

7. Elément de fixation selon l'une des revendications précédentes, **caractérisé en ce que** l'élément de fixation (1) est produit en une seule pièce à partir de matière plastique.

8. Elément de fixation selon l'une des revendications précédentes, **caractérisé en ce que** la distance entre la section inférieure (2) et la section supérieure (4), sur laquelle les rebords (21) peuvent être reçus dans la position emboîtée, diminue vers l'extérieur.

9. Combinaison d'un élément de fixation (1) selon l'une des revendications précédentes et d'un collier d'attache pour tuyaux (10), de préférence en plastique, pour fixer un tuyau à l'élément à section profilée (20), lequel collier d'attache pour tuyaux (10) comprend une partie pied (30) qui est conçue pour fixer le collier d'attache pour tuyaux (10) à l'élément de fixation (1).

10. Système de fixation comprenant un élément de fixation (1) selon l'une des revendications 1 à 8, ainsi qu'un élément à section profilée (20) comportant des rebords (21) qui sont positionnés à une distance l'un de l'autre et délimitent entre eux une fente longitudinale (22).

11. Système de fixation selon la revendication 10, dans lequel l'épaisseur des rebords (21) augmente depuis la fente longitudinale (22) dans la direction transversale de l'élément à section profilée (20).

12. Agencement de fixation pour fixer un collier d'attache pour tuyaux (10) à un élément à section profilée (300) comportant des rebords (301) qui sont positionnés à une distance l'un de l'autre et délimitent entre eux une fente longitudinale (302), lequel agencement de fixation comprend :
- un premier élément de fixation (201) qui comprend une plaque de base (202) qui comporte une surface inférieure qui est conçue pour s'engager sur la face externe des rebords (301) de l'élément à section profilée (300), des éléments de verrouillage flexibles (204), qui font saillie depuis la plaque de base (202) et sont conçus pour s'engager sur la face interne de l'élément à section profilée (300), derrière les rebords (301), étant agencés sur la surface inférieure (203) de la plaque de base (202), à une distance l'un de l'autre, et une ouverture (205) étant agencée dans la plaque de base (202) entre les éléments de verrouillage (204),
- un deuxième élément de fixation (1), qui peut être accouplé au collier d'attache pour tuyaux qui doit être fixé à l'élément à section profilée (300) et est pourvu d'une oreille (2) qui, dans une première position, peut être emboîtée dans l'ouverture (205) dans le premier élément de fixation (201) et peut être tournée dans une deuxième position afin d'entrer en interaction avec les éléments de verrouillage (204) du premier élément de fixation (201),
dans lequel agencement de fixation, en service, l'oreille (2) est tournée dans la deuxième position, les éléments de verrouillage (204) sont poussés vers l'extérieur par l'oreille (2), et l'agencement de fixation peut être verrouillé par rapport à l'élément à section profilée (300).

13. Agencement de fixation selon la revendication 12, dans lequel la distance entre les parties des éléments de verrouillage flexibles (204) qui sont les plus éloignées vers l'extérieur est supérieure à la largeur de la fente longitudinale (302) dans l'élément à section profilée (300).

14. Agencement de fixation selon la revendication 12 ou 13, dans lequel les éléments de verrouillage flexibles (204), à leur extrémité libre, comportent des oreilles de verrouillage faisant saillie vers l'extérieur (206).

15. Agencement de fixation selon l'une des revendications 12 à 14, dans lequel, sur la face externe, au moins un trou (210) est agencé à proximité de chaque élément de verrouillage (204) dans la plaque de base (202), lequel trou (210) s'étend depuis la surface inférieure (203) vers le haut à travers la plaque de base (202) pour insertion d'un outil afin de pousser les éléments de verrouillage (204) vers l'intérieur lorsqu'ils doivent être déverrouillés dans la position emboîtée.

16. Agencement de fixation selon l'une des revendications 12 à 15, dans lequel le premier élément de fixation (201) est produit en une seule pièce à partir de matière plastique.

17. Agencement de fixation selon l'une des revendications 12 à 16, dans lequel le deuxième élément de fixation (1) est produit en une seule pièce à partir de matière plastique.

18. Agencement de fixation selon l'une des revendications 12 à 16, dans lequel le deuxième élément de fixation (1) correspond à un élément de fixation (1) selon l'une des revendications 1 à 8.
